# EUROPEAN PATENT APPLICATION

(11) **EP 1 701 246 A2**
(43) Date of publication of application: **13.09.2006**
(21) Application number: 06001424.8
(22) Date of filing: 24.01.2006
(51) Int. Cl.: G06F 3/12

(54) **System and method for managing output path with context preservation**

(30) Priority: 11.03.2005 US 76968
(71) Applicant: Microsoft Corporation, Redmond WA 98052 (US)
(72) Inventor: McLuckie, Craig I., Redmond, WA 98052 (US); Emerson, Daniel F., Redmond, WA 98052 (US); Stokes, Michael D., Redmond, WA 98052 (US); Turner, Richard S., Redmond, WA 98052 (US); Yue, Feng, Redmond, WA 98052 (US)
(74) Representative: Goddar, Heinz J.

(57) **Abstract**

A system and related techniques expose color printing resources to applications, utilities, operating system and other resources, to automatically detect output capabilities as well as to permit integrated print functions which preserve metadata and other context within the printing workflow. According to embodiments of the invention in one regard, a set of applications may invoke or access a print subsystem to transmit one or more image files to a laser, inkjet, dye sublimation or other printer or other output device. According to embodiments of the invention, the print subsystem may interface to a color management engine and/or a non-color image management engine to automatically negotiate a set of enhanced or optimized print parameters, such as gamma correction, white balance correction, media selection or other options or parameters, for instance for color printing on photographic paper. Because those print or other output capabilities may be automatically detected or discovered, those enhanced settings may in many cases be generated transparently, without user intervention. In addition, metadata surrounding the image file including for instance file size, date and time information, editing status, printing status and other parameters may be preserved and made available to print drivers and other levels of resources in the printing chain, in both directions so that context may be consistently preserved and applications may enjoy extensive or complete control over the image printing process.

## Description

### CROSS-REFERENCE TO RELATED APPLICATION

Not applicable.

### STATEMENT REGARDING FEDERALLY SPONSORED RESEARCH OR DEVELOPMENT

Not applicable.

### FIELD OF THE INVENTION

The invention relates to the field of electronic printing, and more particularly to a platform in which color image printing or other output activity may be managed end-to-end over the output path, automatically detecting output capabilities and negotiating output settings while preserving an image file context.

### BACKGROUND OF THE INVENTION

The proliferation of imaging devices such as digital still cameras, digital video cameras and other image capture hardware has led to an increase in the photo printing and other printing and output markets. Home, business and professional users increasingly make use of a wide array of output devices such as inkjet printers, color laser printers, dye sublimation and other output technology to print their digital photographs and other image files.

However, while output hardware has advanced in many respects, the necessary software and platform resources needed for quality color print output has not correspondingly advanced in all respects. In the case of a desktop computer user who wishes, for instance, to print one or a group of digital photographs, the act of printing those objects still requires some degree of technical knowledge and participation by the user, even under comparatively modem operating systems and other platforms. For instance, a camera manufacturer's photo viewing or browsing program may permit the selection of image files to print, and permit certain color correction functions to be performed, such as white balance corrections, contrast adjustments, adjusting gamma functions or others.

However, when photo viewing, image processing or other applications send an image file to the printing system of an operating system or other platform to print, according to current technology that file is communicated in one direction only to print spoolers and other resources, to be printed without maintaining the context of that object or print job. Moreover, the necessary print parameters needed to produce accurate color printing may not be automatically set or optimally defaulted, nor may those parameters be easily discovered by the user to even manually set or select. Moreover, those print variables may remain hidden from applications, operating system resources and participants in the printing workflow, which participants may similarly not be able to identify what print processing has been done at other stages in the output chain. In general the workflow associated with the initiation, configuration and execution of color printing tasks is fraught with user challenges and inefficiencies, and moreover offers no guarantee of optical or satisfactory results. In the context of an application printing to multiple printers or other output devices, there is likewise no guarantee of consistent output results. Other problems in printing and other output technology exist.

### SUMMARY OF THE INVENTION

The invention overcoming these and other problems in the art relates in one regard to a system and method for managing a computer or other print path with context preservation, in which applications may communicate with an integrated print subsystem, for instance embedded in an operating system or other platform, which may receive, analyze and automatically condition the digital photographs or other image files or objects for optimized or high-quality output, given the user's available or attached printing equipment and hardware. According to embodiments of the invention, contextual workflow and data associated with a printing job or other output event may be preserved in an end-to-end fashion so that, for example, an image may be selected for printing in an application, transmitted to a color management engine or other rendering resource for optimization and returned to the print subsystem for delivery to printer drivers and printed. The intelligence in the output path may moreover provide a transparent mechanism for applications and other resources to probe and discover the capabilities of the printing system as a whole. Those discovered settings may be interpreted by the application or other initiator according to an understood schema, as well as interpreted and honored by the application, output device or other consumer. Those discovered settings or capabilities may likewise be used by an application or other resource to generate optimized settings for color printing or other output, based on printer hardware capabilities or other factors. Upon the completion of output processing stages, according to embodiments of the invention the image file or associated data may be updated and returned to the calling application to indicate print job status, color correction factors, number of pages outputted, date or time information, and other contextual data or metadata associated with the file, including cached transforms that may be used for later print jobs. Applications may thereby retain more extensive or complete control over the printing process, and the state of image files being sent to output. Image metadata may according to embodiments be made available to resources in the print chain down to the level of print drivers, and other levels, at each of which the metadata and contextual workflow may be preserved. According to embodiments of the invention in a further regard, intelligent or optimizing choices may automatically be made for print output parameters. In embodiments those intelligent choices may be made by both the application that initiates the print job based on the discovered capabilities reported by the print system, and/or the participants in the output workflow which honor the output objectives or intent specified by the initiator. In another regard, according to embodiments of the invention and due in one respect to the context preservation and automatically negotiated settings, the consumer of image files or content may be effectively decoupled or made less dependent on the producer of that content, since a consumer or other user need not be extensively familiar with all data and settings of subject files, to generate satisfactory output from that content.

### BRIEF DESCRIPTION OF THE DRAWINGS

Fig. 1 illustrates an environment in which a system and method for managing a print path with context preservation may operate, according to embodiments of the invention.

Fig. 2 illustrates an environment in which a system and method for managing a print path with context preservation may operate, according to embodiments of the invention in another regard.

Fig. 3 illustrates a user interface including print selection options, according to embodiments of the invention.

Fig. 4 illustrates a flowchart of overall print or other output processing, according to embodiments of the invention in another regard.

### DETAILED DESCRIPTION OF EMBODIMENTS

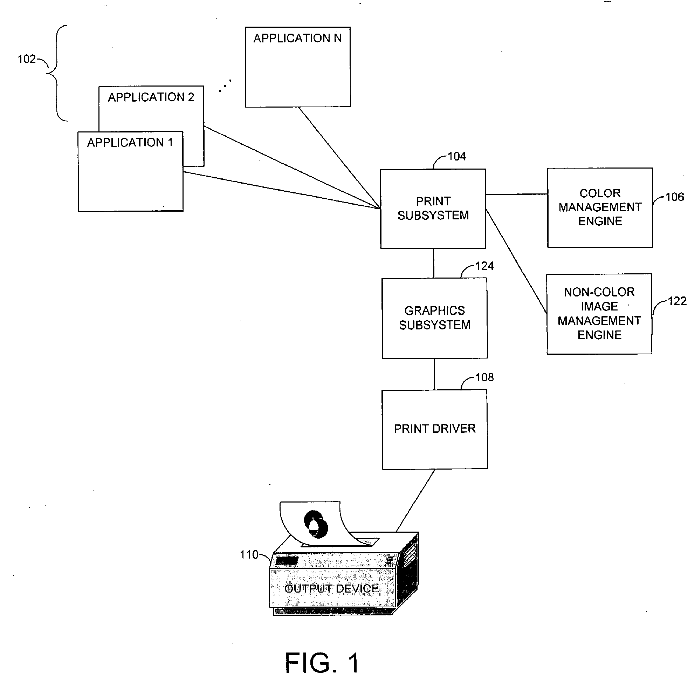

Fig. 1 illustrates an architecture in which a system and method for managing a print path with context preservation may operate, according to embodiments of the invention. As illustrated in that figure, according to embodiments of the invention a set of applications 102 may communicate with a print subsystem 104 to probe or discover the output capabilities of a color printer system or other output resources, as well as to initiate, execute and complete print or other output tasks using the discovered hardware and software. Print subsystem 104 may in embodiments reside in a single resource such as an operating system, or may in other embodiments be distributed across multiple platforms or resources. The set of applications 102 may for instance reside or execute on a personal computer or other client machine, and may include, for example image processing applications, tools or utilities such as an image or photo processing or editing application, an image viewer program, a file browser program, a print program, or another program, utility, operating system or other resource. The print subsystem 104 may be, include or interface to output-related resources such as print-related application programming interfaces (APIs) exposing print functions, handles to various printer or other output drivers, and other print control logic or functionality. In embodiments, the print subsystem 104 may be embedded in or hosted by an operating system, or other platform or resource.

According to embodiments of the invention in a further regard, the print subsystem 104 may communicate with a color management engine 106 and/or a non-color image management engine 122, each of which may likewise be hosted or execute in an operating system or other platform or resource. The color management engine 106 may in one regard receive image files or other image-related data, and perform color adjustment or correction actions of that content. For example, the color management engine 106 may be configured to automatically perform, negotiate or initiate white balance adjustment or correction, gamma adjustment or correction, exposure adjustment or correction, contrast adjustment or correction, or other color-related adjustment, correction or image processing. In embodiments, the non-color image management engine 122 may likewise perform, negotiate or initiate non color-based image manipulation tasks, such as image rotation, scaling, alignment or other adjustment or correction. Color management engine 106 and non-color image management engine 122 may for instance access operating system or other resources to be aware of video display adapter characteristics, display screen characteristics, printer capability or characteristics as well as other output parameters in order to compensate, adjust or negotiate image quality settings.

Print subsystem 104 may likewise communicate via a graphics subsystem 124 with a print driver 108, which driver or set of drivers may for example be incorporated in, stored by or registered to an operating system or other platform or resource. The print driver 108 may be, include or incorporate information related to printing or output operations on specific printer hardware, such as font information, memory configuration, communications protocols, media types or capacity, or other data or information used by a printer or other output device to generate output. The print driver 108 may therefore in one regard expose the set of color printing or other output capabilities of output device 110. The print driver 108 may be extensible and updateable, for instance by loading updated or additional drivers via optical media, Internet download or other sources. The graphics subsystem 124 which may mediate between the print subsystem 104 and the print driver 108 may in embodiments be hosted in an operating system or other platform, and may for example in embodiments be, include, interface to or be implemented with versions of the graphics device interface (GDI) incorporated in the Microsoft Windows™ family of operating systems, the OpenGL™ platform, the DX™ graphic platform, or other graphics platforms or resources.

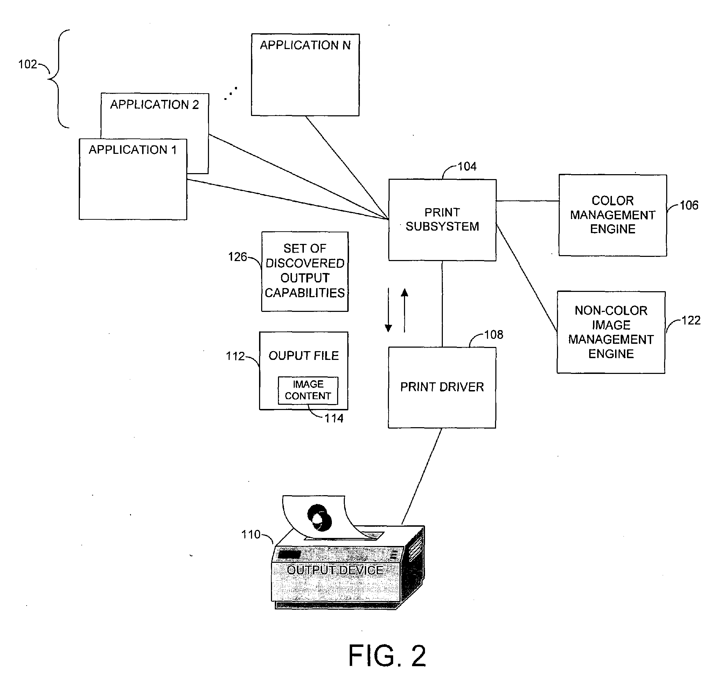

According to embodiments of the invention in a further regard, and as for example illustrated in Fig. 2, a user may select one or more output file 112 by operation of an application in the set of applications 102 or otherwise, to send to output device 110 for printing or other output. According to embodiments of the invention, the one or more output file 112 or other object may be or include an image file such as a digital photograph, a digital video image, clip art or other composed content, or other image content or data. In embodiments the output file 112 may likewise contain non-image or non-bitmapped content such as static or dynamic (time-based) raster or vector content, or other content or imagery. The output file 112 may, for example, be stored or encoded in an image format such as a joint photographic experts group (JPEG) file, a bitmap file (BMP), a tagged image format file (TIFF), a portable network graphics (PNG) file, or other file or format. The output file 112 may have associated with or encoded within it an image context 114 which may be or include data characterizing or quantifying the image content itself, including for instance white point, gamma correction information, ink characteristics of output device 110, detected paper type available in output device 110, file size and file type information, language information, date and time information, version information, print job status information, or other information characterizing the state or content of output file 112.

According to embodiments of the invention in one regard, the application within the set of applications 102, operating system or other program or resource which invokes the print subsystem 104 to transmit the output file 112 to the output device 110 may maintain control of and be advised of status regarding the output file 112 and the generation of output from that file. The calling application, operating system or other program, utility or resource which invokes the print subsystem 104 to perform that task may preserve control and feedback in the output path, in one regard via access to the image context 114 which is communicated with and characterizes the state of the output file 112. That is, the metadata associated with the output file 112 which is encoded in image context 114 may be accessed, monitored, updated by and/or reported to the print subsystem 104, color management engine 106, non-color image management engine 122, the print driver 108 and other resources in the output path, including the set of applications 102, at all levels of the output rendering process. Likewise, each of the resources in the output path may likewise have access to the set of discovered output capabilities 126 returned by or associated with the output device 110 and other resources, so that the set of applications 102 and other consumers of and participants in the print or other output services may adjust options and parameters taking those capabilities into account.

According to embodiments of the invention in one regard, the image context 114 and/or the set of discovered output capabilities 126 may be bidirectionally communicated to each of those levels, so that the calling application may be aware of the state of the output file 112 and its print or other output job, continuously during the output cycle. The print subsystem 104, color management engine 106, non-color image management engine 122 and other resources may likewise automatically negotiate or adjust color quality or other image or print settings for the output file 112 or other image object using image context 114 and the set of discovered output capabilities 126, in a further regard. Thus according to the invention in one regard, the consumer or user of the digital content of output file 112 may be decoupled or made less dependent on the producer of output file 112, since the consumer or user of that content need not be exhaustively familiar with the content or format of that file, nor the hardware details of output device 110, to usefully access, manipulate and print that content. Moreover, every participant in the output path may retain access to the original output intent or objective specified by the calling application or other initiator, and may similarly have access to the adjustments and manipulations made by other participants in the output path while output activity is in process.

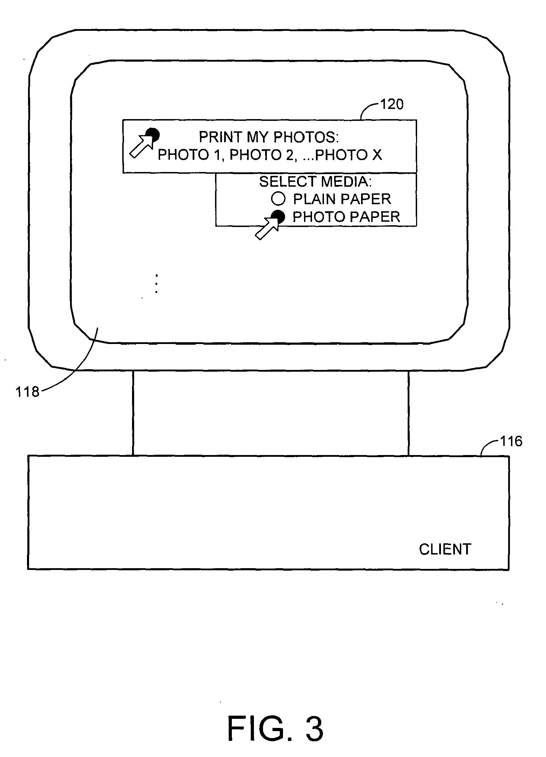

Thus according to embodiments of the invention, and as for instance shown in Fig. 3, a user may be presented with a set of print selections 120 by way of a user interface 118 of a client 116, for example on a graphical user interface of a computer or other machine or platform. The set of print selections 120 may be generated or presented, for instance by an application in the set of applications 102, by the operating system itself, or other tools, programs, utilities or resources. According to embodiments in this regard, the set of print selections 120 may present the user with a comparatively compact set of task-oriented choices, such as to select photos or images to select, to select a general image quality target, to select a media type, or other higher-level parameters or selections to manage the color printing or other output task. Those output tasks may in one regard be categorized as involving at least a broad output intent specified by the user that may be hardware-agnostic, such as "photo print at best quality" which may instruct the output path to generate the best available output given the content of output file 112, making optimizing selections aimed toward the user's output intent.

Alternatively, the output tasks and/or user intention may likewise involve a set of hardware-specific tasks, options or selections which may not be presented to the user unless the specific output hardware supports those tasks or options, such as printing on special media types. However, due to the integrated print architecture of the invention including print subsystem 104, color management engine 106 and non-color image management engine 122 capable of generating default or independent optimizations on the printing of output file 112, the user may in general avoid hardware and other configuration tasks, and simply address their desired output goals. The set of applications 102 or other tools, programs or resources may report the higher-level initiation, progress and completion of a color printing or other output task, again based in part on the preservation of image context 114 and sharing of the set of discovered output capabilities 126 within the printing or other output path, transparently to the user.

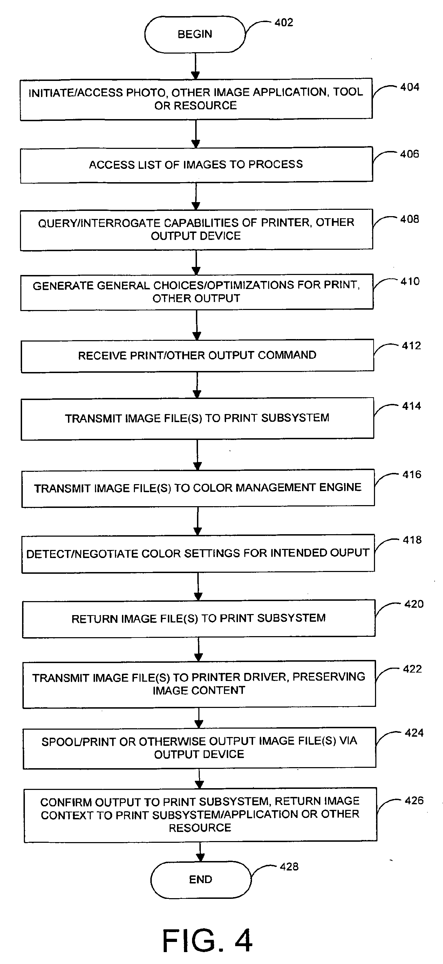

Overall print or other color output processing is illustrated in Fig. 4. In step 402, processing may begin. In step 404, an application within set of applications 102 such as an image or photo processing application, an image viewer program, a file browser program, a print program, or another program, utility, operating system or other resource may be accessed, loaded or initiated, for instance on client 102 or other machine. In step 406, a directory, index or other list or identifier into a set of images to be processed may be accessed, for instance via a file management tool or other resource. In step 408, one or more calling application in the set of applications 102 or other initiator may query or interrogate the print subsystem 104 and other resources to detect the set of discovered output capabilities 126 of the output device 110. In step 410, the application or other initiator may generate general or optimized choices for print or other output tasks, for instance using the set of discovered output capabilities 126 or other data.

In step 412, a print or other output command may be received via an application within set of applications 102, or other utility, program, operating system or other resource. In step 414, one or more output file 112 may be transmitted to the print subsystem 104, for instance a print subsystem 104 embedded in an operating system of client 116, or other platform. In step 416, the print subsystem 104 may transmit the one or more output file 112 to color management engine 106 and/or non-color image management engine 122, for instance to automatically negotiate or adjust image print settings. In step 418, print settings such as such as white balance, gamma correction, contrast adjustment, media selection, ink or dye parameters, or other settings, functions or processes related to the outputting of output file 112 may be detected, identified and automatically negotiated, optimized or adjusted by color management engine 106 and/or non-color image management engine 122. In step 420, the one or more output file 112 may be returned to, accessed again by or placed under control of the print subsystem 104.

In step 422, the output file 112 may be transmitted to the print driver 108, preserving in one regard the image context 114 including data such as image size, type, date and time, edit, version information, print job status, digital rights management information, color context data such as for example color space or color profile data, and other image-related, image-derived or other associated output data or metadata. Color context data may for further example contain or include metadata necessary to unambiguously describe image content in terms which are independent of the output device and/or viewing conditions or perceptual factors. Color context data may in a further regard contain or include optional metadata to specify or control output device-specific data or options such as ink type, paper or other media type, halftone methods or other information. Color context data may for further instance contain, include or refer to standard or defined color spaces such as sRGB (standardized Red Blue Green) defined or stated by the IEC (International Electrotechnical Commission) 61966-2-1 standard (incorporated by reference), an ICC (International Color Consortium) profile, a PostScript™Level 2 Color Rendering Dictionary or Color Space Array, or other context, reference, standard or data.

In step 424, the output file 112 may be spooled, printed or otherwise outputted via output device 110, such as printing on a color laser, inkjet or other printer. In step 426, the outputting of output file 112 may be confirmed or messaged to the print subsystem 104 or other resources, while the image context 114 and related data may be returned or transmitted to the print subsystem 104, to the calling application in the set of applications 102, or to other operating system or other resources. In step 428, processing may repeat, return to a prior processing point, jump to a further processing point or end.

The foregoing description of the invention is illustrative, and modifications in configuration and implementation will occur to persons skilled in the art. For instance, while the invention has generally been described in terms of an output device 110 which may be or include a printer of various types, in embodiments other types of output devices, such as copy machines, facsimile machines, multifunction machines or others may be used to generate print or other output.

Similarly, while the invention has in embodiments been described as involving the management and printing of an output file 112 which may be or include an RGB or other color-encoded file or object, in embodiments output file 112 may be or include an image encoded or represented in grayscale, sepia or other color spaces or formats. Further, while the invention has generally been described as operating in an environment where a single client 116 may transmit output file 112 or other object to a single output device 110, in embodiments multiple clients, machines or sources may transmit one or more output file 112 to output device. Similarly, in embodiments one or more client 116 or other machine or source may transmit one or more than one output file 112 to multiple output devices 110, such as a grouping of local or remote printers connected on a area network, for instance via the Internet or a local area network. Other hardware, software or other resources described as singular may in embodiments be distributed, and similarly in embodiments resources described as distributed may be combined. The scope of the invention is accordingly intended to be limited only by the following claims.

## Claims

1. A system for managing the outputting of an output object through an output path, comprising:
an interface to receive at least one output object and associated context; and
a print subsystem, the print subsystem communicating with-
an output device to automatically receive a set of discovered output capabilities associated with the output device, and
the interface to receive the at least one output object and associated context,
the print subsystem transmitting the at least one output object to the output device using at least settings automatically generated based on the set of discovered output capabilities.

2. A system according to claim 1, wherein the at least one output object comprises at least one of an image object, a raster object and a vector object.

3. A system according to claim 1, wherein the print subsystem communicates at least one of the set of discovered output capabilities and associated context to other resources in the output chain.

4. A system according to claim 3, wherein the other resources in the output chain comprise at least one application invoking the print subsystem to generate an output of the at least one output object.

5. A system according to claim 4, wherein the communication of at least one of the set of discovered output capabilities and associated context is bidirectional.

6. A system according to claim 1, wherein the associated context comprises at least one of metadata associated with the at least one output object and a user's output intention.

7. A system according to claim 6, wherein the associated context comprises at least metadata associated with the at least one output object, and the metadata comprises at least one of output object type, output object size information, output object date information, output object time information, output object version status information, output object output job status information, color context information and output object digital rights management information.

8. A system according to claim 1, wherein the output device comprises a printer.

9. A method for managing the outputting of an output object through an output path, comprising:
receiving at least one output object and associated context;
automatically detecting a set of discovered output capabilities associated with an output device;
automatically generating settings based on the set of discovered output capabilities; and
transmitting the at least one output object to the output device using at least settings automatically generated based on the set of discovered output capabilities.

10. A method according to claim 9, wherein the at least one output object comprises at least one of an image object, a raster object and a vector object.

11. A method according to claim 9, further comprising communicating at least one of the set of discovered output capabilities and associated context to other resources in the output chain.

12. A method according to claim 11, wherein the other resources in the output chain comprise at least one application invoking the print subsystem to generate an output of the at least one output object.

13. A method according to claim 11, wherein the communicating of at least one of the set of discovered output capabilities and associated context is bidirectional.

14. A method according to claim 9, wherein the associated context comprises at least one of metadata associated with the at least one output object and a user's output intention.

15. A method according to claim 9, wherein the output device comprises a printer.

16. An output object, the output object being processed for outputting through an output path according to a method of:
receiving at least one output object;
automatically detecting a set of discovered output capabilities associated with an output device;
automatically generating settings based on the set of discovered output capabilities; and
transmitting the at least one output object to the output device using at least settings automatically generated based on the set of discovered output capabilities.

17. An output object according to claim 16, wherein the at least one output object comprises at least one of an image object, a raster object and a vector object.

18. An output object according to claim 16, wherein the method further comprises communicating at least one of the set of discovered output capabilities to other resources in the output chain.

19. An output object according to claim 18, wherein the other resources in the output chain comprise at least one application invoking the print subsystem to generate an output of the at least one output object.

20. An output object according to claim 16, wherein the output device comprises a printer.
